# NEW EUROPEAN PATENT SPECIFICATION

(11) **EP 0 347 007 B2**
(45) Date of publication and mention of the opposition decision: **16.06.1999**
(45) Mention of the grant of the patent: 15.11.1995
(21) Application number: 89201570.2
(22) Date of filing: 16.06.1989
(51) Int. Cl.: A23D 7/00

(54) **Churned margarine-like product made from a cream and method of manufacturing**
Rahm, aus diesem hergestelltes margarinähnliches Butterungsprodukt und Verfahren zu deren Herstellung
Crème, produit baratté ressemblant à la margarine, fabriqué à partir de celle-ci et procédé pour leur fabrication

(30) Priority: 17.06.1988 GB 8814479
(43) Date of publication of application: 20.12.1989
(73) Proprietor: UNILEVER N.V., 3013 AL Rotterdam (NL); UNILEVER PLC, London EC4P 4BQ (GB)
(72) Inventor: van Heteren, Jan, Esher Surrey KT10 9TD (GB); Martine, Jean Claude, F-95610 Eragny/Oise (FR); Vermaat, Karel Theodorus, NL-3086 KK Rotterdam (NL)
(74) Representative: Mulder, Cornelis Willem Reinier, Dr.

(56) References cited:
- EP-A- 0 096 631
- EP-A- 0 101 104
- EP-A- 0 106 620
- EP-A- 0 139 398
- EP-A- 0 155 246
- EP-A- 0 198 533
- EP-A- 0 199 398
- EP-A- 0 264 149
- EP-A- 0 276 517
- US-A- 3 746 551
- US-A- 3 900 503
- US-A- 4 315 955
- US-A- 4 425 370
- L: Document so quoted for it's casting doubt on the validity of the Convention Priority Claim
- W.H. Knightly, "The role of ingredients in the formulation of whipped toppings", Food Technology, Vol. 22, 732, June 1968, 731-744

## Description

The present invention relates to a churned margarine-like product made from a cream, and to a processes for producing such a margarine-like product. In particular the invention relates to the churning of non-dairy creams so as to obtain a butter-like product with a high iodine value.

Creams are emulsions of the oil-in-water type, and are well known both as starting materials and intermediates in methods for the production of edible spreads, including butter and margarine. In such methods the dispersed fat phase of the cream is converted into a continuous crystallised fat phase in which a dispersed aqueous phase is present.

With dairy cream, particularly in conventional butter-making, this has been accomplished by the well-established method of cooling and working the cream in a churn.

For the purposes of the present specification the term churn and references to churning are intended to embrace respectively all apparatus and methods using such apparatus in which a plastified edible fatty emulsion is formed under conditions in which buttermilk is expressed. Examples of many types of churning process and apparatus are well known to the man skilled in the art. The term dairy fat as used herein refers to fats obtained from lacteal fluids, whereas the term non-dairy fat refers to fats such as may be obtained from vegetable matter, from animal carcases or marine sources such as fish. The term animal fat is generally intended to include within its scope fats obtained from animal sources such as animal tallow and lard, but to exclude dairy fats. Other than were the context demands otherwise the terms "oil and "fat" are considered interchangeable.

During churning partial phase separation occurs with loss of much of the aqueous phase as buttermilk and a concentration of the dairy fat phase in the butter mass. A vast body of literature is concerned with the process conditions and physical changes which subsist during the butter-churning process.

The butter obtained from the conventional churning process has desirable mechanical properties as regards spreadability and elasticity over a relatively narrow range of temperatures; much research has concerned how this range can be extended.

Moreover, butter contains a relatively high level of fat having a relatively low level of unsaturation. Details of the exact composition of butterfat can be found in, for example, International Dairy Federation document 125 (pp 4-13). Typical compositions for milk fat are 61% saturated fatty acids, 36% monounsaturated fatty acids and 3% poly-unsaturated (so-called "essential") fatty acids. In recent years there has been considerable medical interest in reducing the dietary intake of such saturated fats. Many consumers now find a diet rich in saturated fat unacceptable, and research has concerned how a proportion of the fat may be replaced by vegetable oils, as vegetable oils are generally thought to be more dietetically more acceptable, or, by fish oils which are also considered more acceptable than animal fats.

Churning of margarines is also known. In the original margarine production process described by Mouries in GB 2157 (1869) rendered (fractionated) animal fat having the same melting point as dairy fat was dispersed in milk plasma by churning and the product treated with ice-cold water to cause the emulsion to solidify.

Vegetable oils were first used in margarine fat compositions towards the end of the nineteenth century, in proportions of around 20% to soften the end product. The oils used were generally of the lauric fat type, having steep melting curves over a relatively narrow range of temperature. These lauric/animal fat products tended to be too hard and brittle at low temperatures and too soft at high temperatures. As the price of animal fats rose, the proportions of vegetable fat continued to rise until by 1907 vegetable fat comprised some 25-30% of the fat blend of European margarines. It was not possible to incorporate more than this proportion as the resulting products became far too soft during warm weather.

In 1912-13 edible hydrogenated fats became available in commercial quantities. Hydrogenation generally increases the melting point of fats and tends to products with a smooth melting curve. With these harder fats it became possible to produce vegetable fat blends having melting properties similar to the animal fats previously employed and the margarine industry became relatively independent of the beef fat and lard market.

In parallel with the establishment of new compositions, new processing techniques became available. In 1905 GB 25404 disclosed a continuous emulsification apparatus consisting of an elongate chamber with a co-axial shaft mounted for rapid rotation. Developments towards higher rates of shear were continued and resulted in the "Votator" (Registered Trade Mark); the first practical scraped-surface heat exchanger. A significant advantage of these high shear methods is that greater proportions of liquid vegeatble oil can be incorporated into the product, as compared with the churning methods originally applied to margarine manufacture. A further advantage of the "Votator" process is continuous, rather than batch, preparation of the product. "Votators" and similar apparatus have now largely superseded churns in margarine production.

The incorporation of liquid vegetable oil into margarines, and the subsequent reduction of the hydrogenated fat content, is also considered to be important for dietary reasons. Whereas vegetable oils liquid at ambient temperatures contain relatively high levels of cis-unsaturated fats, partially hydrogenated fats contain a reduced level of these components and fully hydrogenated fats contain exclusively saturated fats. Over the past twenty years there has been an increasing demand for margarine compositions containing progressively higher levels of unsaturated fats, particularly containing the so-called "essential" fatty acids, and consequently higher levels of liquid oils.

A convenient measure of the extent of unsaturation of a fat is the so called "iodine-value". This value is defined as the number of parts by weight of iodine which can combine with 100 parts by weight of fat. Some exemplary iodine values are given in the table below, as are approximate melting points in degrees centigrade;

**TABLE ONE**

| Fat or Source | Iodine Value (IV) | Melting Point |
|---|---|---|
| Animal Fats | | |
| Winter Butter | 27-34 | 30-32°C |
| Summer Butter | 41-50 | 30-32°C |
| Beef Tallow | 42-48 | 40-46°C |
| Lard (pig fat) | 52-68 | 30-40°C |

| Lauric Fats | | |
|---|---|---|
| Coconut Fat | 8-10 | 23-25°C |
| Palm Kernel Oil | 15-18 | 27-28°C |
| Palm Oil | 53-60 | 33-39°C |

| Liquid Oils | | |
|---|---|---|
| Olive Oil | 83-87 | <0°C |
| Cottonseed Oil | 104-112 | <0°C |
| Soybean Oil | 130-135 | <0°C |
| Sunflower Oil | 127-137 | <0°C |
| Linseed Oil | 180 | <0°C |

From the table it can be seen that in general the liquid oils have high iodine-values while solid fats have low iodine values. Hydrogenation of unsaturated fats lowers the iodine values to an extent determined by the degree of hydrogenation.

The general technical problem of margarine manufacture is clear from the table. If a fat has a high iodine value, it is of low melting point and a soft product results when this fat is made into a margarine. Thus there is a limit upon the quantity of liquid fat which be introduced into a margarine, and consequently a limit upon the poly-unsaturated fatty acid content of margarines.

To a great extent this difficulty can be overcome by the use of highly specialised fat blends and "Votator" processing as described above. It is however, difficult to make a butter-like product by a votator process, as the natural inhomogeneous structure of butter is not attained by high shear processing. Consequently there is a need to combine the churning process with the use of non-dairy fat blends rich in unsaturated fatty acids in order to manufacture churned margarines which contain high levels of liquid oil.

Some attempt has been made to produce such products by blending dairy fat containing materials with vegetable fats and churning the resulting composition.

For example, European Patent 0106620 discloses a process in which cream separated from cows milk is blended with soybean oil and hydrogenated soybean oil to produce a composition having the same solid fat content as butter, and thus to overcome seasonal variations in the hardness of butter. Up to 75% of the total fat content can comprise non-airy triglycerides, without detriment to the rheological properties of the product. However, in order to maintain the hardness of the product it was found necessary to use hydrogenated non-airy fats, and the preferred combinations of vegetable and dairy fat disclosed in EP 0106620 were close to 50/50 blends.

European patent 0155246 goes further towards an attempt to churn a pure vegetable blend, but stipulates that the iodine value of the blend must be substantially equal to that of butter. Although the examples of this patent again state that excellent products can be made with a 50/50 blend, the product quality deteriorates as the vegetable oil content is increased. When the vegetable fat content reaches 80% the products are only "acceptable with some hesitation". At a vegetable fat content of 90% the products are considered "too soft for commercial use". The skilled man would conclude from this art that even with low iodine values, non-dairy churned products are unlikely to approach the rheology of butter when churned.

Another approach is disclosed in US 4425370. In that document, it is proposed to carefully process a skim-milk/vegetable oil cream to achieve an oil-droplet size range essentially similar to that of dairy cream, before blending the non-dairy cream with dairy-cream and churning the mixture. The droplet size of dairy cream ranges from 2µ to 20µ.

It should be noted that US 4425370 not given any general details of the distribution of the droplet diameters within the range limits given. However it is stated that ensuring that the droplet size range of the non-dairy components is "essentially identical" to that of the dairy components makes it possible to churn the mixed cream without the addition of emulsifiers. In the examples of that patent, raw dairy cream is mentioned as having droplet sizes ranging from 2.7µ to about 8.0µ with an average globule size of around 4.0µ. The average droplet size of the combined vegetable and dairy cream was 5.3µ with an overall range of 2.6µ to 8.0µ. As the droplet size of a non-dairy cream is originally much larger than the droplet size of a dairy cream a sufficiently fine dispersion of the oil can be obtained by homogenization of the non-dairy cream.

US 4425370 discloses how its method can manufacture products with 60% vegetable fat and 40% butterfat. An important realisation in that case was that the stability of the dairy cream and the vegetable cream had to be similar such that the rate of agglomeration of the fat globules was similar for both types of globules. As mentioned this was accomplished by homogenising the vegetable cream to a drop size which was actually slightly larger than the dairy cream, with a mean drop size of 5.3 micron in the mixture as opposed to 4.0 micron in the dairy cream. Simple calculation shows that the mean drop size of the non dairy cream must be in the region of 6-7 microns.

GB 1216568 discloses a vegetable cream with a high pufa content which can be churned to give a product with 14% poly-unsaturated fatty acids 35.5% mono-unsaturated fatty acids and 50.5% saturated fatty acids. This product would have an iodine value of around 60.

As opposed to the attempts to arrive at a butter-like product with a higher iodine value by adding a suitable liquid oil to dairy cream before churning, attempts have been made to achieve this goal by the use of specific emulsifier systems in combination with steam treatment of a vegetable cream, prior to churning. The technical progress in this direction is set out clearly in US 4315955. That specification discloses how since the 1940's there has been a continued attempt to produce a product which has the advantages of both butter and margarine but the disadvantages of neither product. The general method disclosed involves the use of a hydrogenated vegetable oil which is mixed with a milk-like phase to produce a cream. The hydrogenated vegetable oil is dispersed in the aqueous phase by means of steam treatment followed by the application of a partial vacuum. One difficulty with this method is a tendency for the cream to "prechurn" causing blockage of the plant. Whereas the prior art to this US patent did not make any particular choice of emulsifier, the teaching of the US patent involves the use of a specific combination of emulsifiers to stabilise the cream prior to churning. As the examples of the US patent demonstrate, the mono-glyceride emulsifiers are particularly good at stabilising a cream, in which the comparatively large oil droplets would otherwise be unstable. Even with the application of these advanced techniques the preferred iodine value of the fat blend used in the method of the invention was no higher than 85.

EP 139389 discloses the use of semi-stable cream which is less stable than dairy cream under conditions of shear but which can be churned to form a spread

We have now determined how a churned margarine with an iodine value in excess of 85 and butter-like properties can be manufactured. Surprisingly, we have determined that this does not require the use of steam and vacuum treatment or the use of complex fatty acid compositions. Our invention concerns the preparation of a cream containing at most a minor portion and preferably little or no dairy fat, prior to churning of this cream to produce a butter-like spread. An important realisation being that the cream must be more stable than dairy cream. The method of the invention is not restricted to the preparation of the high iodine-value products, but can be employed in the manufacture of products having iodine values ranging from around 35 to above 100.

First a semi-stable cream is prepared containing no or a minor portion of dairy fat and having a numeric average non-dairy fat droplet size below that of dairy cream and further comprising a water in oil promoting emulsifier.

Semi-stable creams are those which can be churned by the application of shear but are sufficiently stable to withstandn handling operations such as gentle pumping and the like. The cream according to the invention shows a stability to phase inversion in the presence of shear greater than the corresponding stability of fresh dairy cream under identical conditions.

According to the present invention there is provided a process for the manufacture of an edible spread containing a fat phase with an iodine value in excess of 85 and in which fat globules are dispersed, which comprises the steps of;
a) preparing a cream containing no or a minor portion of dairy fat and with a droplet size distribution such that the numeric average droplet diameter is below that of fresh dairy cream under identical conditions,
b) churning the cream obtained in step (a) in the presence of a water in oil promoting emusifier to obtain a plastified product.

According to a second aspect of the present invention there is provided an edible spread containing a fat phase with an iodine value in excess of 85 and in which fat globules are dispersed preparable by a method comprising the steps of;
a) preparing a cream containing no or a minor portion of dairy fat with a droplet size distribution such that the numeric average droplet diameter is below that of fresh dairy cream.
b) churning the cream obtained in step (a) in the presence of a water in oil promoting emusifier to obtain a plastified product.

Typically, the method of the invention makes use of a continuous churn. Suitable for this purpose is the so-called "fritsch" continuous buttermaker.

Suitable emulsifiers include the so-called saturated monoglycerides, tweens, lecithins and lactic acid ester emulsifiers. These are preferably present between 0.05% and 1% by fat phase. As the drop size of the non-dairy cream employed in the method of the present invention is smaller than dairy cream, it is important that sufficient emulsifier activity is present to promote the formation of a water-in-oil emulsion in the churn. In the absence of a water-in-oil promoting emulsifier the cream may be difficult, and at particularly small drop sizes impossible, to chum.

Preferably, no dairy cream is added to the non-dairy cream during the process. However, the addition of minor amounts of dairy cream or dairy fats is not excluded.

The aqueous phase of the cream may comprise low fat milk or skim-milk. This skim-milk may be natural skim-milk or reconstituted by solution of skim-milk powder in a suitable aqueous medium. The churned by-product buttermilk, whether fresh or recombined may also be employed as the major component of the aqueous phase.

As mentioned above, the fatty components of the cream are in general non-dairy fats. These may be hydrogenated or inter-esterified as is well-known in margarine manufacture. However, the use of hydrogenated fat should be minimized where a high content of unsaturated or polyunsaturated fat is desired.

The hardness of the margarine products of the invention is largely determined by the fat components selected. Some examples of the solids index as measured by NMR are given in table 2 below. It can be seen that the product is slightly softer than butter at low temperature, but is otherwise comparable and generally similar to the "Bregott" products discussed above. A suitable method of NMR spectroscopy is described in Haighton et al (Fette Seifen Anstrichmittel No.5 1978).

**TABLE TWO**

| T°C | Product Solids% | Butter Solids% | Bregott Solids% |
|---|---|---|---|
| 10 | 30 - 45 | 43 - 52 | 37 - 40 |
| 15 | 22 - 30 | 29 - 36 | 26 - 29 |
| 20 | 16 - 20 | 14 - 20 | 15 - 16 |
| 25 | 8 - 15 | 8 - 11 | 7 - 11 |
| 30 | 3 - 5 | 3 - 5 | 3 - 5 |
| 35 | 0 - 3 | 0 - 1 | 0 - 1 |

The drop size distribution in the non-dairy cream should be such that the numeric average droplet diameter is below that of fresh dairy cream as mentioned above. Preferably the volume-averaged drop size should be below 5µm and/or more than 50% by number of the non-dairy fats present should be below 2µm diameter.

The present invention will be illustrated hereafter by way of example and with reference to the accompanying figures in which are shown
(i) a schematic figure of a plant for performance of the method of the invention;
(ii) a graph of globule diameter in µ against % volume in a sample of dairy-cream and the non-dairy cream of the present invention;
(iii) a graph of globule diameter in µ against number of globules in equivalent volumes of dairy cream and the non-dairy cream of the present invention.

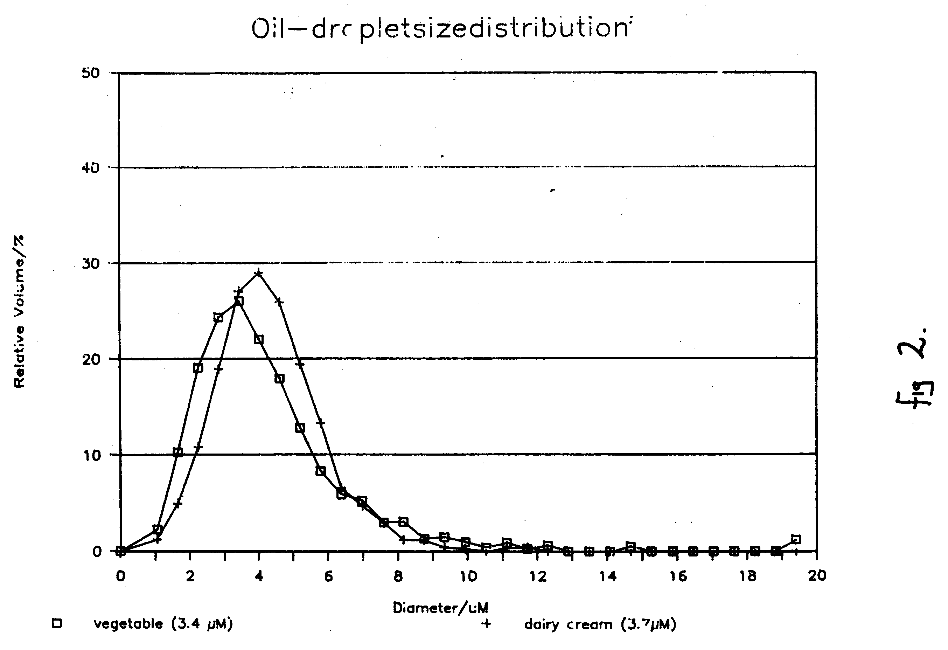

Figure 2 illustrates how the prior art did not consider the distribution of drop sizes of the cream. Dairy cream is seen from figure 2 to have a drop size range in agreement with that given in US 4 425 370, with the bulk of the fat volume being concentrated in droplets between 2µ and 20µ, especially from 2-7µ to 8.0µ with a mean around 4µ. A cream used according to the present invention is superficially similar to dairy cream in that the volume average of the cream globule diameters is close to 4µ.

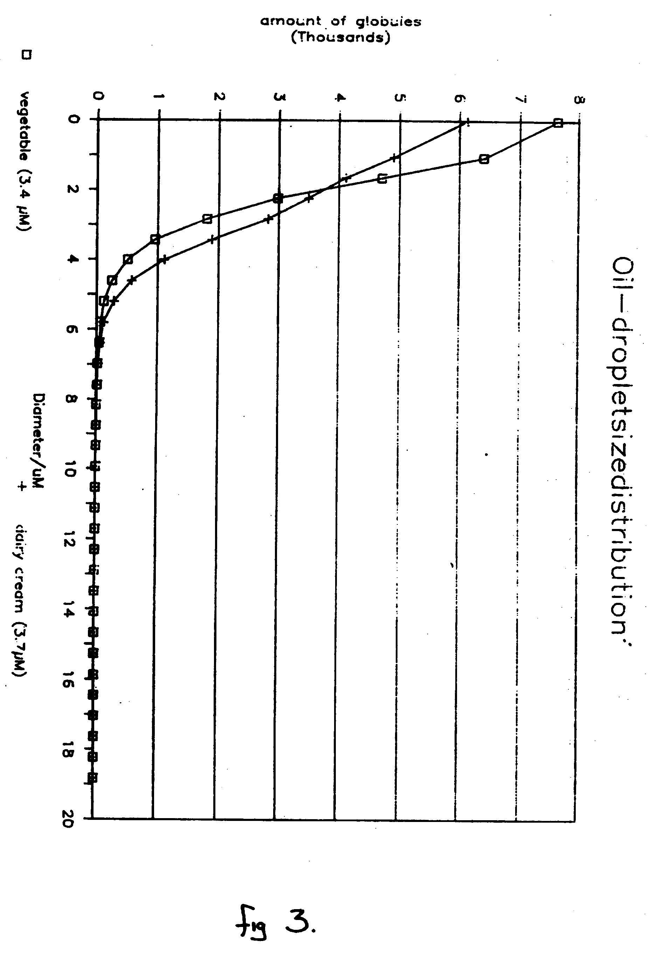

When the number of globules is considered, it is seen, as illustrated in figure 3 that the non-dairy creams have many more small oil drops than dairy cream. It should be noted that figure 3 plots "lowest titre" against diameter, thus the vertical axis scale is the number of drops larger than a certain size. For the two creams upon which figures 2 and 3 were based the %number of oil droplets below 2µ was 64% for the non-airy cream and 42% for the dairy cream. In a further non-dairy cream 63% of the total number of oil drops in a sample were found to have diameters of less than 2µ. Although these small droplets do not contribute to the fat volume to the extent that larger droplets do, it is believed that their presence has a marked effect on the properties of products churned from the cream.

The following examples illustrate the use of such non-dairy creams in the production of spreads.

### Example 1:

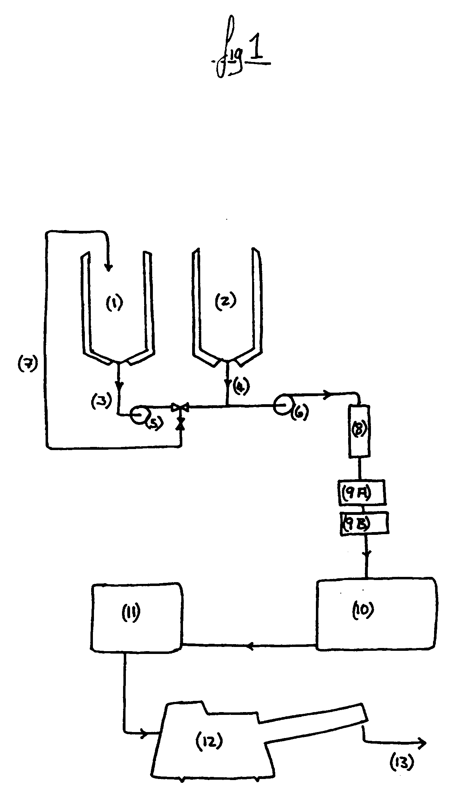

A cream was prepared with the composition shown in table 3 below. The apparatus used in the performance of the method is shown schematically in figure 1. The fat-phase is stored in water-jacketed tank (1) at 60°C, from which it is drawn at a rate of 120 kg/hr along line (3) by pump (5). The aqueous phase is stored in water-jacketed tank (2) at 60°C, from which it is drawn by pump (6) along line (4). The capacity of pump (6) is 300 kg/hr; thus 180 kg/hr of the aqueous phase are drawn along line (4). Pump (6) delivers the 40% fat phase/60% aqueous phase mixture to mixing unit (8) where a 40% oil in water cream is formed.

Recirculation line (7) enabled the flow rate of the fat phase to be controlled.

Good results were obtained when the mixing unit (8) comprised a plurality of baffles defining a serpentine flow path so as to induce turbulence in the throughput stream. It is believed that mechanical mixing using for example a high-speed "C-unit" would provide an alternative mixing method.

Homogenisation was performed in a two stage "Rannie" homogenizer (9A,9B).

The cream was pasteurized at 85°C and cooled to ripening temperature in heat-treatment apparatus (10).

Following ripening at 5°C the cream was churned at 5°C and a solids level of 20% in a conventional "fritsch" type buttermaker (12) and the product packed at (13).

The product had the following initial hardness values at the indicated temperatures C5-980, C10-1450, C15-1050, C20-478.

**TABLE THREE**

| Cream Composition | | IV = 96 | |
|---|---|---|---|
| Fat Phase | 36% | Aqueous Phase | 64 % |
| Bean Oil | 45% | Buttermilk Pdr. | 9 % |
| Bean Oil M.p. 36°C | 55% | Salt | 1 % |
| Monglyceride | 0.2% | Water | to 100 % |
| Colour | tr. | | |
| Flavour | tr. | | |

### Example 2

Example 1 was repeated with the fatty and aqueous phases given in table 4, except that churning was performed at 12°C. The product had initial C-values (hardness) at the indicated temperatures of C5-645. C10-615, C15-720, C20-265.

**TABLE FOUR**

| Cream Composition: | | IV = 100 | |
|---|---|---|---|
| Fat Phase | 36% | Aqueous Phase | 64% |
| Sunflower Oil | 52% | Buttermilk Pdr. | 9% |
| Bean Oil M.p. 36°C | 26% | Salt | 1% |
| Palm Oil M.p. 44°C | 4% | | |
| Rape Oil M.p. 30°C | 18% | | |
| Monglyceride | 0.2% | Water | to 100 % |
| Colour | tr. | | |
| Flavour | tr. | | |

### EXAMPLE 3:

Example 1 was repeated with a blend of the non-dairy cream as described in example 1 and fresh dairy cream having the same fat content. The ratio of components being 30% dairy cream to 70% non-dairy cream. For comparative purposes the experiment was repeated with dairy cream. The figures given in table 5 below illustrate how the stability of the blended cream and the non-dairy cream compared with dairy cream. The column NDC contains the original results for example 1 whereas the column 'blend' contains the results for the blend of 70% NDC and 30% dairy cream.

**TABLE 5**

| Measured Value | DC | Blend | NDC |
|---|---|---|---|
| Throughput (F) Kg/hr | 2000 | 1200 | 1200 |
| Beater speed (N) | 1000 | 1800 | 2200 |
| Power required | 0.5 | 4.9 | 8.9 |

From the table it can be seen that the creams according to the present invention are more difficult to churn than dairy cream, requiring a higher beater speed and slower throughput in the churning process. The interpretation of this is that the creams are more stable than dairy cream. The advantage of this additional stability is that in the melange product, identified as 'blend' above, the dairy cream globules are broken first in the churning process. Thus, the surviving globules in the product are mostly of non-dairy origin and the continuous fat phase which exibits a more rapid flavour release is believed to contain a larger proportion of the dairy fat.

The power required is expressed as a relative value determined in part by the dimensions of the equipment used for churning. The power required figure as given is proportional to the figure obtained by the cube of the rotation speed (N) of the beater divided by the throughput of the cream (F) in a continous churn.

It be should be noted that a cream which is comprised of very small droplets will not break even when subjected to high speed churning at very low throughput. Thus, creams according to the present invention will in general churn at a value of k*N*N*N/F greater than 1 and preferably less than 10. Where k is such that dairy cream gives a value of less than 1.

### MEASUREMENT OF OIL DROP SIZE AND DISTRIBUTION IN CREAM:

An important feature of the present invention is the measurement of oil drop size and distribution in the cream prior to churning. This being a sensitive measure of the stability of the cream. While this measurement need not be carried out continuously, some attention must be given to this factor when setting up plant to operate the process aspect of the invention. As the drop size attained under differing process conditions and with differing apparatus will vary considerably, the following protocol for measuring drop size distribution is given.

The fat globule size was measured using a "Coulter Counter" (Registered Trade Mark) Model ZM obtained from Coulter Electronics. Northwell Drive. Luton, England, using the following methodology. It should be noted that the methodology is similar to that suggested in the "Operator's Handbook for the Coulter Counter Model ZM, issue A, November 1985".

A sample of cream was drawn off from the process line immediately prior to the churn. The sample was mixed at a dilution of 1:15000 into a suitable aqueous medium (ISOTON II: Registered Trade Mark). Manometer volume was settled to 50µl, and gain set at 4-Ranks of particle diameter, as determined by varying settings of the current value, lower threshold value and attenuation. A measuring tube with an aperture of 50µm was employed.

Calibration of the apparatus was performed using generally spherical 2.06µm diameter polyvinyl toluene latex particles, by the so-called "half count method". With the apparatus used a calibration constant of Kd=5.050 was determined.

The D3,2 value was determined according to the method and definition described by Dr. M. Alderliesten (A Nomenclature for Mean Particle Diameters, Anal Pix., Vol 21). Typical results for a small range of diameters are given in Table 6 below;

**TABLE 6**

| Cream Type: Globule Diam | Non-Dairy | | Dairy | |
|---|---|---|---|---|
| | Count | Vol% | Count | Vol% |
| 00.0 | 0.00 | 00.0 | 00.0 | 00.0 |
| 0.76 | 47015 | 0.83 | 23926 | 0.48 |
| 1.01 | 32466 | 1.46 | 17013 | 0.39 |
| 1.50 | 23506 | 2.38 | 15082 | 0.64 |
| 1.99 | 18066 | 4.92 | 13891 | 2.21 |
| 2.50 | 12790 | 6.62 | 11958 | 4.00 |
| 3.00 | 8925 | 7.81 | 10058 | 12.67 |
| 3.50 | 6162 | 9.34 | 6408 | 8.63 |
| 3.99 | 4002 | 7.60 | 4783 | 13.99 |
| 4.50 | 2795 | 8.35 | 2975 | 12.04 |

Results similar to those shown in table 6 were used to produce figures 2 and 3.

## Claims

1. A process for the manufacture of an edible spread containing a fat phase with an iodine value in excess of 85 and in which fat globules are dispersed which comprises the steps of;
a) preparing a cream containing no or a minor portion of dairy fat with a droplet size distribution such that the numeric average droplet diameter is below that of fresh dairy cream.
b) churning the cream obtained in step (a) in the presence of a water in oil promoting emulsifier to obtain a plastified product.

2. An edible spread containing a fat phase with an iodine value in excess of 85 and in which fat globules are dispersed preparable by the process according to claim 1.

3. An edible spread according to claim 2 wherein the average diameter of dispersed fat globules lies in the range 1-8 µm.

## Patentansprüche

1. Verfahren zur Herstellung eines eßbaren Aufstriches, der eine Fettphase mit einer Jodzahl von mehr, als 85 enthält und in dem Fettkügelchen dispergiert sind, das die Schritte umfaßt das
a) Herstellens eines Rahms, der keinen oder einen geringen Anteil an Molkereifett enthält, mit einer solchen Tröpfichengrößenverteilung, daß der numerische durchschnittliche Tröpfchendurchmesser kleiner als der von frischem Molkereirahm ist, und
b) Kirnens des in Schritt (a) erhaltenen Rahms in Gegenwart eines Wasser-in-Öl-begünstigenden Emulgators zur Erzielung eines plastifizierten Produktes.

2. Eßbarer Aufstrich, der eine Fettphase mit einer Jodzahl von mehr als 85 enthält und in dem Fettkülgelchen dispergiert sind, herstellbar nach dem verfahren gemäß Anspruch 1.

3. Eßbarer Aufstrich nach Anspruch 2, in dem der durchschnittliche Durchmesser der dispergierten Fettkügelchen im Bereich von 1 bis 8 µm liegt.

## Revendications

1. Procédé de fabrication d'un produit à tartiner comestible contenant une phase grasse ayant un indice d'iode excédant 85 et dans laquelle les globules de matières grasses sont dispersées, comprenant les étapes suivantes :
a) préparation d'une crème ne contenant aucune matière grasse laitière ou n'en contenant qu'une faible partie, dans laquelle le diamètre moyen numérique de gouttelettes de matières grasse dans la crème est inférieur à celui d'une crème laitière fraîchement préparée.
b) opération de barattage de la crème obtenue à l'étape (a) en présence d'un émulsifiant activateur de type eau dans l'huile afin d'obtenir un produit plastifié.

2. Produit à tartiner comestible contenant une phase grasse ayant un indice d'iode excédant 85 et dans lequel les globules de matières grasses sont dispersées, la préparation pouvant se faire par le procédé selon la revendication 1.

3. Produit à tartiner comestible selon la revendication 2 dans lequel le diamètre moyen de globules de matières grasses dispersée se situe dans l'intervalle compris entre 1 et 8 µm.
